**Europäisches Patentamt**

**European Patent Office**

**Office européen des brevets**

(19)

(11) Veröffentlichungsnummer: **0 053 799**
**A1**

(12) # EUROPÄISCHE PATENTANMELDUNG

(21) Anmeldenummer: **81110098.1**

(22) Anmeldetag: **03.12.81**

(51) Int. Cl.³: **H 02 P 7/62**

(30) Priorität: **10.12.80 DE 3046406**

(43) Veröffentlichungstag der Anmeldung:
**16.06.82 Patentblatt 82/24**

(84) Benannte Vertragsstaaten:
**AT CH FR GB IT LI NL SE**

(71) Anmelder: **IWE Ingenieurgesellschaft für wirtschaftliche Energienutzung mit beschränkter Haftung**
**Rathenaustrasse 33**
**D-6078 Neu-Isenburg(DE)**

(72) Erfinder: **Dürr, Walter**
**Odenwaldring 7**
**D-6050 Offenbach a.M.(DE)**

(72) Erfinder: **Weisse, Dietrich, Ing.grad**
**Vierlingstrasse 27**
**D-6923 Waibstadt 2(DE)**

(72) Erfinder: **Simon, Ulrich**
**Ernst-Ludwig-Allee 24**
**D-6072 Dreieich(DE)**

(72) Erfinder: **von Neufville-Schoepflin, Friedwalt, Ing.grad.**
**Im kleinen Grund 7**
**D-6233 Kelkheim(DE)**

(74) Vertreter: **Holzhäuser, Peter Karl, Dr.-Ing. et al,**
**Patentanwälte Dr.-Ing.P.K. Holzhäuser**
**Dipl.-Met.W.Goldbach Dipl.-Ing.Ing.L.Schieferdecker**
**Herrnstrasse 37**
**D-6050 Offenbach am Main(DE)**

(54) **Verfahren und Schaltungsanordnung zum Regeln bzw. Steuern der Drehzahl eines mit Drehstrom betriebenen Motors.**

(57) Die Erfindung befaßt sich mit einer Schaltungsanordnung zum Regeln bzw. Steuern der Drehzahl eines mit Drehstrom betriebenen Motors. Bisher ist es üblich, entsprechend dem Stromfluß dimensionierte Elemente wie z.B. Triacs oder Thyristoren zu verwenden. Nach der Erfindung wird es möglich, wesentlich kleiner dimensionierte Elemente einzusetzen, da nur die im Sternpunkt auftretenden Stromänderungen erfaßt werden und in Spannungen umgewandelt und nur für eine voreinstellbare Zeitdauer an die jeweilige Wicklung des Motors angelegt werden.

Fig.1

EP 0 053 799 A1

COMPLETE DOCUMENT

Dr.-Ing. Holzhäuser
Dipl.-Met. Goldbach
Dipl.-Ing. Schieferdecker
Patentanwälte
Herrnstraße 37 · 6050 OFFENBACH

0053799

WG/Ek.

Firma

IWE Ingenieurgesellschaft für

wirtschaftliche Energienutzung

mit beschränkter Haftung

Rathenaustraße 33

6078 Neu-Isenburg

---

Verfahren und Schaltungsanordnung zum Regeln bzw.

Steuern der Drehzahl eines mit Drehstrom betriebenen

Motors.

---

Die Erfindung bezieht sich auf ein Verfahren und eine Schaltungsanordnung zum Regeln bzw. Steuern der Drehzahl eines mit Drehstrom betriebenen Motors, dessen Wicklungen in Sternschaltung geschaltet sind.

Bekannte Regel - und Steuervorrichtungen für Drehstrommotoren sind wegen der direkten Strom-Steuerung bzw. - Beeinflussung recht aufwendig, platzraubend und teuer.

Der Erfindung liegt die Aufgabe zugrunde, eine einfache Regel- bzw. Steuervorrichtung für Drehstrommotoren zu schaffen.

Zur Lösung dieser Aufgabe sieht die Erfindung in einem Verfahren vor, daß in Abhängigkeit von der Stromaufnahme der Wicklungen die im Sternpunkt auftretenden Stromänderungen in Spannungsänderungen umgewandelt werden, die bei verminderter Stromaufnahme die Drehzahl des Motors dadurch verringern, daß die Spannungen nur für eine voreinstellbare Zeitdauer an die jeweiligen Wicklungen gelegt wird.

Bei einer praktischen Ausführung der Erfindung ist vorgesehen, daß die Motorwicklungen über eine gesteuerte Diodenanordnung an den Sternpunkt gelegt sind, daß der Sternpunkt an den einen Pol und daß die Diodenanordnung über eine Ansteuerschaltung an den anderen Pol einer Stromversorgung angeschlossen sind.

Bei einem Ausführungsbeispiel der Erfindung kann jede Diodenanordnung aus Triacs bestehen. Bei einer anderen Ausführungsform der Erfindung ist vorgesehen, daß jede Diodenanordnung einen Brückengleichrichter umfaßt und jede Wicklung über einen Zweig der Brückenschaltung und über einen Thyristor über einen anderen Zweig des Brückengleichrichters an den Sternpunkt angeschlossen ist.

Soll der Motor in mehreren Drehzahlstufen betrieben werden so ist nach einem Ausführungsbeispiel der Erfindung vorgesehen, daß für jede Stufe eine gesonderte Diodenanordnung vorgesehen ist.

Weitere vorteilhafte Ausgestaltungen der Erfindung ergeben sich aus den Ansprüchen.

Die Erfindung ist im folgenden anhand der Zeichnungen beispielsweise näher erläutert, und zwar zeigt:

Fig. 1 ein erstes, einfaches Ausführungsbeispiel der Erfindung,

Fig. 2 ein zweites, einfaches Ausführungsbeispiel nach der Erfindung,

Fig. 3 ein drittes, einfaches Ausführungsbeispiel nach der Erfindung,

Fig. 4 eine Ansteuerschaltung für den Betrieb eines Motors in drei Drehzahlstufen und

Fig. 5a und 5b eine Steuerschaltung zu einer Ansteuerschaltung nach Fig. 4, wobei diese jedoch für einen Motor mit geteilten Wicklungen ausgelegt ist;

Fig. 6 ein weiteres, einfaches Ausführungsbeispiel nach der Erfindung.

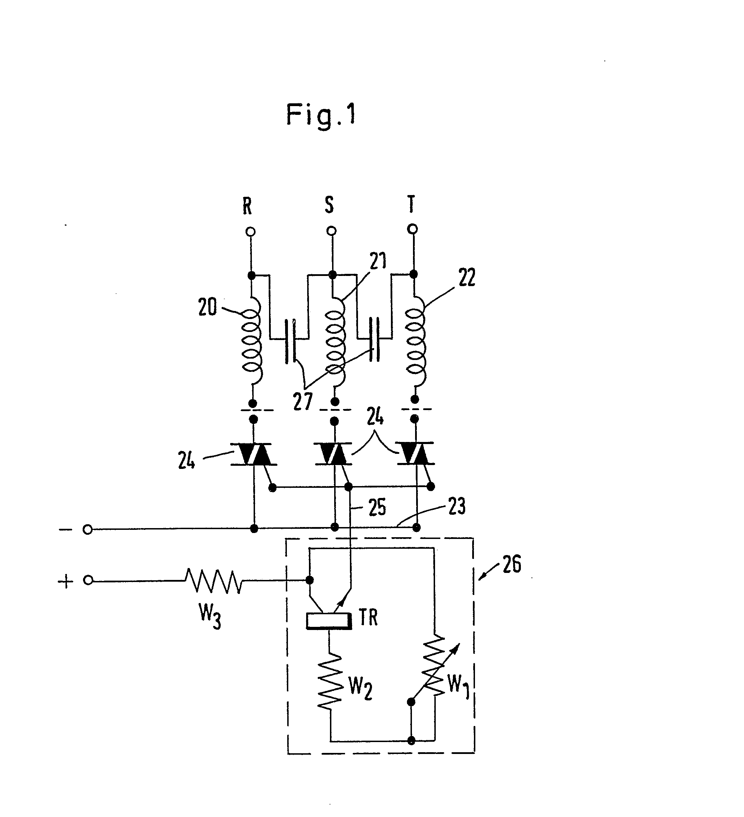

Das Ausführungsbeispiel nach Fig. 1 zeigt die drei Wicklungen 2o, 21 und 22 eines Drehstrommotors, die an eine gemeinsame, den Sternpunkt darstellende Leitung 23 angeschlossen sind. Zwischen den Wicklungen und dem Sternpunkt sind Triacs 24 geschaltet.

Die Steuerleitungen 25 dieser Triacs gehen an eine Ansteuerschaltung 26, die im wesentlichen einen Transistor TR enthält, der als Schalter arbeitet. Mittels eines verstellbaren Widerstandes $W_1$ ist die Basisspannung des Transistors einstellbar, sodaß diese die Triacs 24 für eine bestimmte Zeitdauer einschaltet.

Die den Sternpunkt bildende Leitung 23 ist bei diesem Ausführungsbeispiel an den negativen Pol und der Kollektor der Ansteuerschaltung 26 über einen Begrenzungswiderstand an den Pluspol einer Stromquelle angeschlossen.

Zwischen die Wicklungen 2o, 21 und 22 des Motors sind zwei Kondensatoren 27 geschaltet. Diese bilden mit den Wicklungen Schwingkreise, die der Unterdrückung von Störspannungen in Form von Oberwellen dienen.

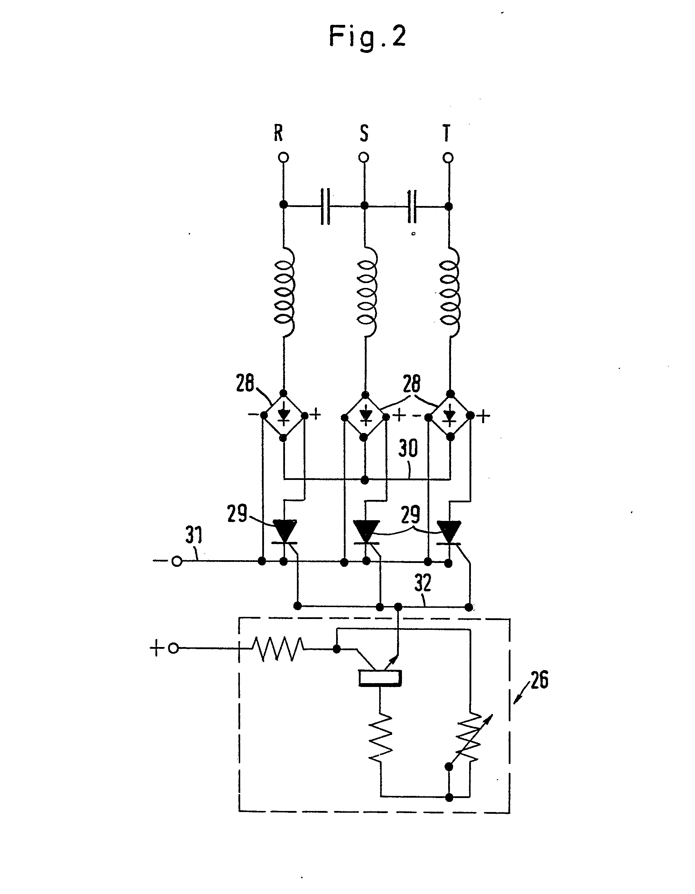

Das Ausführungsbeispiel nach Fig. 2 besitzt im wesentlichen gleichen Aufbau wie das nach Fig. 1. Statt der Triacs ist hier eine Anordnung von Graetzgleichrichtern 28 mit nachgeschalteten gesteuerten Dioden 29 vorgesehen.

Die Motorwicklungen sind an den einen Wechselstromeingang
der Gleichrichter 28 gelegt, während der andere Wechselstromeingang aller Gleichrichter über eine Leitung 3o kurzgeschlossen ist. Die Gleichspannungspole der Gleichrichter
sind einerseits an einer mit dem Minuspol einer Spannungsquelle verbundenen Leitung 31 gelegt, während sie andererseits über die Dioden 29 an die gleiche Leitung angeschlossen sind. Die Steuerleitungen 32 der gesteuerten Dioden sind
an eine Ansteuerschaltung 26 entsprechend der nach Fig. 1
angeschlossen. Als gesteuerte Dioden 29 werden zweckmäßig
rückwärts sperrende Thyristoren verwendet, die kathodenseitig gesteuert sind.

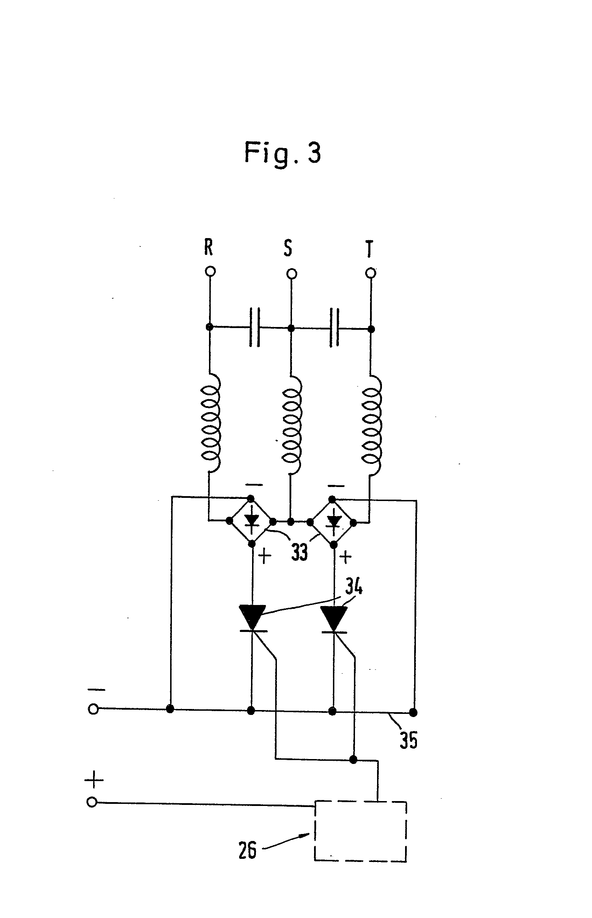

Das Ausgangsbeispiel nach Fig. 3 zeigt den grundsätzlichen
Aufbau nach Fig. 2 mit Gleichrichtern 33, gesteuerten
Dioden 34 und einer gemeinsamen Zuleitung 35 zum negativen
Pol einer Spannungsquelle. Hier sind jedoch statt drei
Gleichrichtern nach Fig. 2 nur zwei Gleichrichter verwendet,
bei denen die Gleichstrompole entsprechend der Fig. 2 geschaltet sind, während die Wechselstrompole jedes Gleichrichters 33 an die eine und die andere Wicklung des Motors
angeschlossen sind.

- 6 -

Diese vorstehend beschriebenen Schaltungsanordnungen besitzen die Eigenschaft daß sie die Motordrehzahl selbsttätig regeln. In den Sternpunktleitungen der Wicklungen fließt die Summe der Strangströme. In Abhängigkeit von der Stromaufnahme der Wicklungen werden mit den dargestellten Schaltungsanordnungen die im Sternpunkt auftretenden Stromänderungen in Spannungsänderungen umgewandelt und die Drehzahl auf einen Wert gehalten, der einer einmal gewählten Einstellung entspricht. Eine Steuerung der Drehzahl ist dann durch Verstellen der Widerstände $W_1$ möglich.

Die Vorteile der beschriebenen Schaltungsanordnungen bestehen darin, daß keine großen Leitungen geschaltet werden müssen und daher verhältnismäßig kleine Bauteile verwendet werden können, die entsprechend billiger sind und außerdem keine großen Probleme bezüglich der Kühlung aufwerfen. Die Regel- bzw. Steuerschaltungen können daher in ihrem Aufbau verhältnismäßig klein gehalten werden.

Besonders vorteilhaft lassen sich erfindungsgemäße Schaltungsanordnungen für die Regelung bzw. Steuerung von Pumpenmotoren, insbesondere in Heizungsanlagen verwenden. Bei Heizungsregelungen mit Außenfühler und Raumthermostat wird die Vorlauftemperatur der Außen- oder Raumtemperatur entsprechend angepaßt. Thermostatventile an den Heizkörpern gestatten dann eine zusätzliche individuelle Temperatursteuerung für jeden Raum.

Dabei muß die Pumpe automatisch in drei Drehzahlstufen bei Änderung der Vorlauftemperatur umgeschaltet werden können. Außerdem muß zusätzlich in der Stufe 3 einer Drehzahländerung durch Öffnen oder Schließen der Thermostatventile der Heizkörper möglich sein.

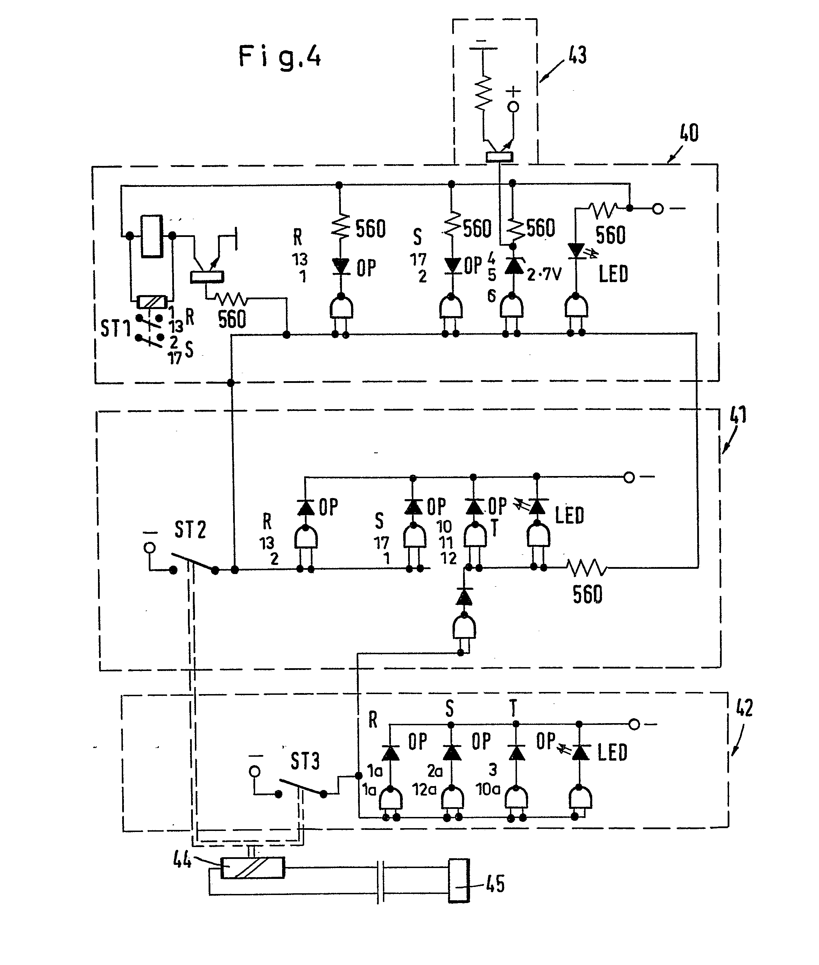

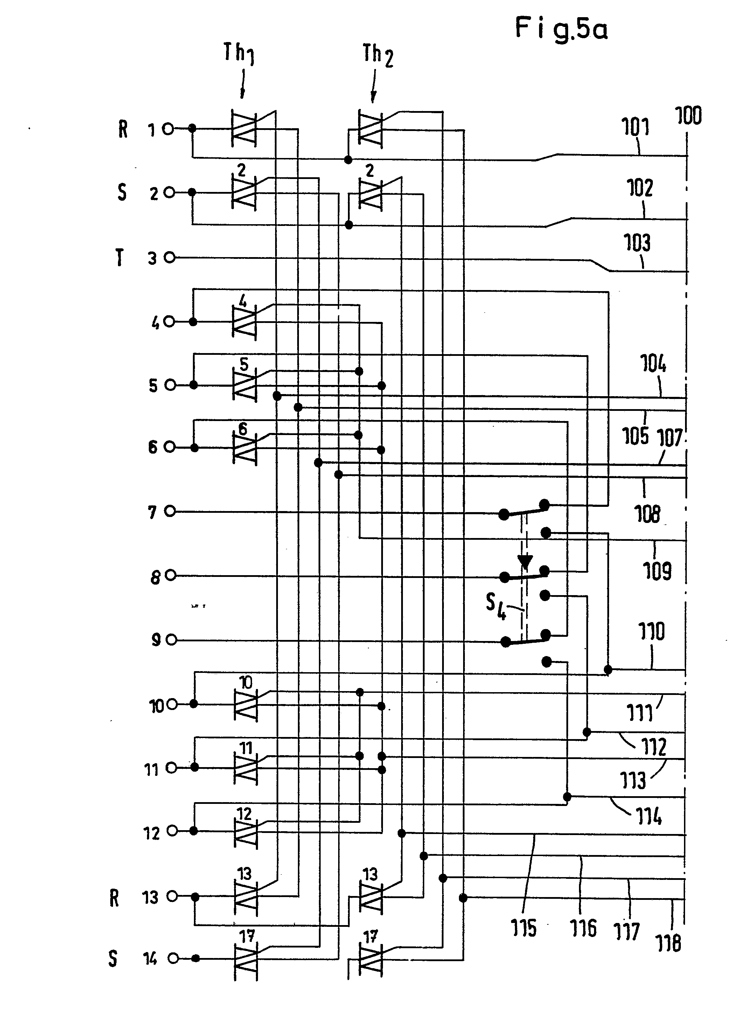

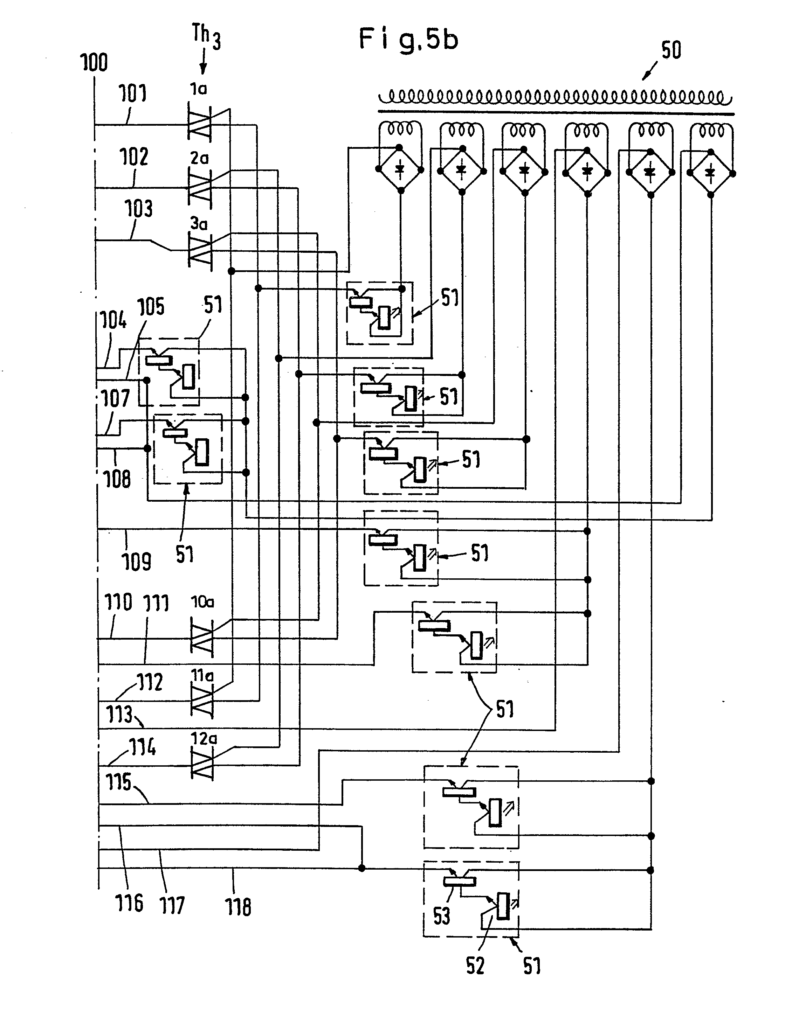

Die Figuren 4 und 5 zeigen ein praktisches Ausführungsbeispiel einer erfindungsgemäßen Schaltungsanordnung, wobei der Motor einer Heizungspumpe insgesamt sechs Wicklungen besitzt und je eine der an die Zuleitungen RS gelegten Wicklungen über Kreuz geschaltet werden können. Es sind somit vierzehn Anschlüsse von der Ansteuerschaltung zu den Wicklungen zu legen. Der recht einfachen Ansteuerschaltung 26 nach den Figuren 1 bis 3 entspricht dann die in Fig. 4 dargestellte Schaltung, die zugleich der Steuerung bzw. Regelung der Pumpendrehzahl in drei unterschiedlichen Stufen dient. Die Schaltungseinheit für die erste Stufe ist dabei im ganzen mit 40, die für die zweite Stufe mit 41 und die für die dritte Stufe mit 42 bezeichnet. Die Eingangsschaltung ist mit 43 bezeichnet.

Jeder Stufe ist ein Schalter zugeordnet, wobei diese Schalter mit St1, St2 und St3 bezeichnet sind. Die Schalter mindestens der Stufen 2 und 3 werden von einem Relais 44 betätigt, das seinerseits von einem Thermofühler 45 angesteuert wird.

- 8 -

Die Schaltungsanordnungen jeder Stufe enthalten für die drei Phasen R, S, und T je einen Optocoppler und eine Leuchtdiode LED zur Kontrolle.

Jedem der genannten Optocoppler sind in der Fig. 4 zwei oder drei Zahlen zugeordnet. Diese Zahlen entsprechen den oben genannten Wicklungsanschlüssen 1 bis 14.

Die genannten Optocoppler dienen außerdem der galvanischen Trennung zwischen der Ansteuerschaltung und der eigentlichen, mit den Wicklungen verbundenen Steuerschaltungen, die in den Fig. 5 a und 5b dargestellt sind. Die Fig. 5a und 5b sind entlang der Linie 100 aneinander gefügt zu denken, wobei die Leitungen 101 bis 118 der Fig. 5a den Leitungen 101 bis 118 der Fig. 5b entsprechen.

Der Stromversorgung dient eine im ganzen mit 50 bezeichnete Gleichrichterschaltung.

Die Optocoppler OP der Fig. 4 sind Bestandteil von untereinander gleichen Schaltungsanordnungen 51 in Fig. 5b. Diese enthalten je einen Fototransistor 52 und einen Transistor 53 als Schalter.

Diese Schaltungsanordnungen 51 sind nun mit Thyristoren zur Ansteuerung der Wicklungen 1 bis 14 verbunden. Die Zuordnung der Thyristoren Th1, Th2 und Th 3 in den Fig. 5a und 5b zu den einzelnen Wicklungsanschlüssen ergeben sich aus den jeweils hinzugefügten ziffermäßigen Zeichnungen der Wicklungsanschlüsse. Der Schalter S4 dient dabei dem Umschalten der beiden oben erwähnten Wicklungen, die zum Anlaufen über Kreuz zu schalten sind.

Das Ausführungsbeispiel nach den Figuren 4 und 5 zeigt, daß ein erfindungsgemäßes Verfahren zum Regeln bzw. Steuern der Drehzahl eines mit Drehstrom betriebenen Motors wesentlich billiger aufgebaut werden kann, weil lediglich Niederspannungs-Elemente verwendet werden müssen und keine Leistungs-Thyristoren gebraucht werden, die den gesamten durch jeweils eine Wicklung fließenden Strom schalten müßten. Trotz der Vielzahl von zu verwendenden Bauelementen ist die gesamte Schaltungsanordnung verhältnismäßig preiswert und auf kleinstem Raum aufzubauen.

Die galvanische Trennung zwischen Ansteuerschaltung und der eigentlichen Steuerschaltung mittels Optocopplern bringt ebenfalls für den Fachmann erkennbare Vorteile.

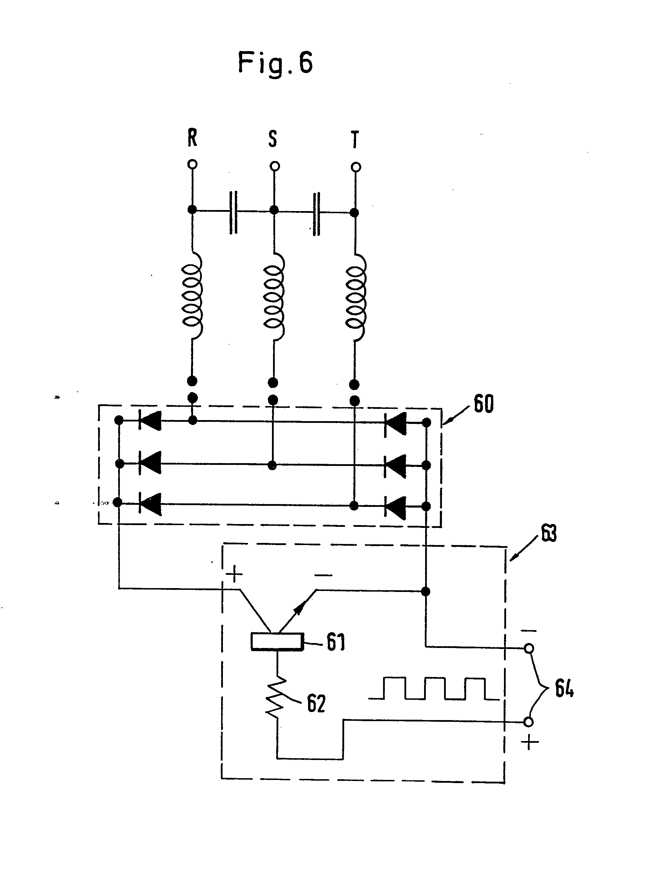

Ein weiteres, einfaches Ausführungsbeispiel der Erfindung ist in Figur 6 schematisch dargestellt.
Hierbei sind die Wicklungen eines Elektromotors in
einer anderen Weise im Sternpunkt zusammengeschaltet,
nämlich sie sind an eine sog. Drehstrom-Brückenschaltung gelegt, an die mindestens ein Schalttransistor
61 angeschlossen ist. Dieser Schalttransistor bildet
zusammen mit einem an seine Basis gelegten Widerstand
62 die Ansteuerschaltung 63. Die Anschlüsse 64 zur
Stromversorgung werden mit einer impulsförmigen Spannung gespeist. Zur Steuerung des Schalttransistors
können nun die mit der Grundfrequenz laufenden Impulse
in ihrer Impulsbreite verändert werden. Es ist jedoch
auch möglich, die Frequenz der Versorgungsspannung
zu ändern und damit den Stromfluß in den Wicklungen
zu steuern. Auch eine Kombination dieser beiden Maßnahmen ist denkbar.

Es ist außerdem denkbar, die über den Widerstand 62
an die Basis des Schalttransistors 61 gelegte Versorgungsspannung zusätzlich über einen verstellbaren
Widerstand an den Kollektor des Schalttransistors 61
zu legen. Eine Verstellung des Widerstandes bewirkt
dann auch eine Veränderung der Schaltzeiten des
Transistors.

4. Schaltungsanordnung nach Anspruch 3, dadurch gekennzeichnet, daß zwischen die Pole der Drehstromanschlüsse (R, S, T) Kondensatoren ( 27 ) gelegt sind.

5. Schaltungsanordnung nach Anspruch 3 oder 4 zur Durchführung eines Verfahrens nach Anspruch 2, dadurch gekennzeichnet, daß sie für jede Stufe eine gesonderte Diodenanordnung besitzt.

6. Schaltungsanordnung nach Anspruch 5, dadurch gekennzeichnet, daß jeder Diodenanordnung eine eigene Ansteuerschaltung zugeordnet ist.

7. Schaltungsanordnung nach einem der Ansprüche 3 bis 5, dadurch gekennzeichnet, daß zwei Diodenanordnungen zwischen den Sternpunkt und den drei Wicklungen geschaltet sind, wobei die Wechselstromanschlüsse zweier Gleichrichter an zwei Wicklungen gelegt sind.

8. Schaltungsanordnung nach einem der Ansprüche 3 bis 7, dadurch gekennzeichnet, daß jede Diodenanordnung aus Triacs besteht.

9. Schaltungsanordnung nach einem der Ansprüche 3 bis 7, dadurch gekennzeichnet, daß jede Diodenanordnung einen Brückengleichrichter umfaßt und jede Wicklung über einen Zweig der Brückenschaltung und über einen
Thyristor über einen anderen Zweig des Brückengleichrichters an den Sternpunkt angeschlossen ist.

10. Schaltungsanordnung nach einem der vorhergehenden Ansprüche, dadurch gekennzeichnet, daß die Ansteuerschaltung
von der Steuerschaltung der Wicklungen galvanisch getrennt
ist.

11. Schaltungsanordnung nach einem der vorhergehenden Ansprüche,
dadurch gekennzeichnet, daß bei geteilten Wicklungen des
Motors jeder Wicklung ein Steuerschaltungsteil zugeordnet
ist.

12. Schaltungsanordnung nach einem der vorhergehenden Ansprüche,
dadurch gekennzeichnet, daß die Gleichrichteranordnung
von einer sog. Drehstrom-Brückenschaltung 60 gebildet
ist, an die mindestens ein Schalttransistor 61 gelegt
ist.

13. Schaltungsanordnung nach Anspruch 12, dadurch gekennzeichnet, daß der Schalttransistor mit einer impulsförmigen Spannung angesteuert ist.

14. Schaltungsanordnung nach Anspruch 13, dadurch gekennzeichnet, daß die Impulsbreite der Speisespannung
und / oder die Frequenz der Speisespannung einstellbar
ist.

Fig.1

Fig.2

Fig. 3

Fig.4

4/7

0053799

0053799

Fig.5a

Fig.5b

0053799

6/7

Fig.6

**Europäisches Patentamt**

## EUROPÄISCHER RECHERCHENBERICHT

| | EINSCHLÄGIGE DOKUMENTE | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | H 02 P 7/62 |
| Y | CH - A - 493 149 (HONSBERG) <br> * Spalte 3, Zeilen 17-29; Figur 1 * | 1,3 | |
| Y | US - A - 3 962 613 (R.D. BARRY) <br> * Spalte 2, Zeilen 1-37; Figuren * | 1,12, 13,14 | |
| A | DE - A - 2 007 858 (TRANSFORMATOREN UNION) <br> * Seite 2, Zeilen 4-16; Seite 3, Zeilen 1-9; Figur 1 * | 1,12- 14 | **RECHERCHIERTE SACHGEBIETE (Int. Cl.3)** <br><br> H 02 P 7/62 <br> H 02 P 5/40 |
| A | DE - A - 2 033 513 (NATIONAL RESEARCH DEVELOPMENT) | 1,3 | |
| A | FR - A - 2 204 074 (TOUR AGENTURER) | 1,3 | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort <br> Den Haag | Abschlußdatum der Recherche <br> 18-03-1982 | Prüfer <br> WEIHS |
|---|---|---|

EPA form 1503.1 06.78